# EUROPEAN PATENT APPLICATION

(11) **EP 4 817 714 A1**
(43) Date of publication of application: **07.10.2026**
(21) Application number: 25218591.3
(22) Date of filing: 26.11.2025
(51) Int. Cl.: A63F 13/50, A63F 3/00, A63F 3/02, A63F 13/71

(54) **METHODS, SYSTEMS AND COMPUTER PROGRAM PRODUCTS FOR CREATING UNIQUE VISUAL OUTPUTS BASED ON UNRELATED INPUTS**

(30) Priority: 03.04.2025 US 202519169306
(71) Applicant: Parikh, Vian, San Diego California 92130 (US)
(72) Inventor: Parikh, Vian, San Diego California 92130 (US)
(74) Representative: Boult Wade Tennant LLP

(57) **Abstract**

Some embodiments of the present inventive concept provide methods of creating unique visual and/or audible output based on an unrelated input by a user. The method includes receiving a plurality of inputs related to a game, the inputs related to the game having at least a time component and logic component; processing the plurality of inputs related to the game to get additional game parameters; creating a unique visual and/or audible output based on the inputs related to the game and additional game parameters, the unique visual and/or audible output being unrelated to the game; and providing the unique visual and/or audible output to the user.

## Description

### FIELD

The present inventive concept relates generally to communication and, more specifically, communication of concepts in various dimensions.

### BACKGROUND

Historically people would be categorized as right-brained and left-brained based on the theory that people tend to have a dominant hemisphere of the brain that influences their thinking and personality. However, modern neuroscience has shown that both hemispheres work together more than previously believed. Still, the concept is useful for understanding different cognitive styles.

In particular, right-brained individuals are considered more creative, emotional, and intuitive. These people generally excel in art, music, storytelling, and imagination and may think in pictures and patterns rather than words. They are generally big-picture thinkers, focusing on overall concepts rather than small details. Right-brained individuals can often be more spontaneous, open to new experiences, and adaptable, but may struggle with structure, organization, or detailed analytical work.

Left-brained individuals, on the other hand, are thought to be more logical, structured, and detail-oriented. They generally excel in math, science, critical thinking, and organization and prefer step-by-step processing and following clear rules. These individuals are more likely to think in words and facts rather than abstract visuals. They generally tend to be practical, methodical, and task-focused and may struggle with creativity, emotional expression, or thinking outside the box.

One could imagine that if a left brain individual were tasked with explaining a concept to a right brained individual, it may not be very productive. Furthermore, some individuals are further identified as neuroatypical. Communicating with neuroatypical individuals, such as those with, for example, autism, attention deficit hyperactivity disorder (ADHD), dyslexia, or other neurodivergent conditions, can sometimes present challenges due to differences in social cues, processing styles, and communication preferences.

In particular, some common issues may include differences in nonverbal communication. Neuroatypical individuals may struggle with eye contact, facial expressions, or body language, making it harder to interpret emotions or intent. Some may not use typical gestures or may have unique ways of expressing themselves.

Another issue may involve misunderstanding literal versus figurative language. For example, people with autism may take language more literally, leading to misunderstandings with sarcasm, idioms, or vague phrasing. Furthermore, abstract concepts or indirect speech might be confusing.

Still further issues may arise with sensory processing differences. Some neurodivergent individuals have heightened or diminished sensory sensitivities, making certain environments overwhelming. Thus, background noise, bright lights, or even specific speech tones may impact their ability to engage in conversation.

Neuroatypical individuals may present with information processing variability. For example, some individuals, such as those with ADHD, may struggle with maintaining focus or may process information in a nonlinear way. Others may need extra time to respond to questions or prefer written over verbal communication.

Many of these individuals struggle with social norms and expectations. Conventional social rules, like small talk or expected greetings, might not feel intuitive to neuroatypical individuals. Thus, they may express themselves bluntly, which can be misinterpreted as rudeness when it is simply direct communication.

Furthermore, some of these individuals may struggle with anxiety and social exhaustion. Social interactions can be mentally draining for some neurodivergent people, leading to anxiety or the need for downtime. This may result in shorter conversations, avoidance of certain settings, or selective social engagement.

Finally, many neuroatypical people have intense focus on specific topics and may talk at length about them, which can be overwhelming for neurotypical listeners. Conversely, they may struggle to engage in topics they don't find interesting.

Accordingly, improved methods of communication amongst individuals that think differently may be desired.

### SUMMARY

Some embodiments of the present inventive concept provide methods of creating unique visual and/or audible output based on an unrelated input by a user. The method includes receiving a plurality of inputs related to a game, the inputs related to the game having at least a time component and logic component; processing the plurality of inputs related to the game; creating a unique visual and/or audible output based on the inputs related to the game, the unique visual and/or audible output being unrelated to the game; and providing the unique visual and/or audible output to the user.

In further embodiments, the game may comprise or be chess. In certain embodiments, the plurality of inputs related to chess may each include or comprise a logic component of a chess move and a time component indicating how long it took the user to make the chess move.

In still further embodiments, each chess move may have a dedicated visual and/or audible output associated therewith and the dedicated visual and/or audible output may be modified by, for example, how long it took the user to make the chess move, by its accuracy level or any additional (other) game parameters.

In some embodiments, the dedicated visual and/or audible outputs may include fixed artistic elements for each move. In certain embodiments, the fixed artistic elements may include (or comprise) one or more of musical notes, musical chords, musical rhythms, colors, shapes, patterns and original art.

In further embodiments, providing the unique visual and/or audible output may include providing the modified dedicated visual and/or audible output of all the chess moves to create the unique visual and/or audible output.

In still further embodiments, the method may further include training the user to play chess using the unique visual and/or audible output.

In some embodiments, the method may further include providing a structured training course for playing chess based on the unique visual and/or audible output.

In further embodiments, the method may further include providing the unique visual and/or audible output to the user as an input to a processing module and using the unique visual and/or audible output to learn new details about a human brain.

In some embodiments, the method may further include using the unique visual and/or audible output to train the user how to play the game.

In further embodiments, the unique visual and/or audible output may be presented as a completely unique item of digital art that cannot be recreated.

In still further embodiments, the unique visual and/or audible output may be presented in a different dimension and/or domain than the game.

A system (for example, a data processing system and/or including modules) and a computer program, optionally stored on a machine-readable non-transitory medium, comprising a set of instructions executable on a computing device are also provided herein, configured to perform the steps of the method.

### BRIEF DESCRIPTION OF THE DRAWINGS

Fig. 1 is a block diagram illustrating a system for transforming inputs from one dimension into another dimension in accordance with some embodiments of the present inventive concept.
Figs. 2A and 2B are flow diagrams illustrating details of the transformation in accordance with some embodiments of the present inventive concept.
Fig. 3 illustrates Table 1 including patterns coordinating to various chess pieces and related timing information in accordance with some embodiments of the present inventive concept.
Figs. 4A and 4B are example artistic outputs having fixed chess move timing and varied chess move timing, respectively, in accordance with some embodiments of the present inventive concept.
Figs. 5A and 5B provide the illustrations of Figs. 4A and 4B, respectively, in a side by side comparison in accordance with some embodiments of the present inventive concept.
Fig. 6 illustrates Table 2 including musical chords coordinating to various chess pieces and related timing information in accordance with some embodiments of the present inventive concept.
Figs. 7A and 7B are diagrams illustrating musical outputs having fixed chess move timing and varied chess move timing, respectively, in accordance with some embodiments of the present inventive concept.
Figs. 8A and 8B are flow diagrams illustrating details of the transformation in accordance with some embodiments of the present inventive concept.
Figs. 9A and 9B are illustrations of data in different dimensions in accordance with some embodiments of the present inventive concept.
Figs. 10A and 10B are diagrams illustrating the same data represented differently in accordance with some embodiments of the present inventive concept.
Figs. 11A and 11B are flow diagrams illustrating details of the transformation in accordance with some embodiments of the present inventive concept.
Fig. 12 is a diagram of a musical output generated by embodiments illustrated in Figs. 11A and 11B in accordance with some embodiments of the present inventive concept.
Fig. 13 is a block diagram illustrating a data processing system for use with some embodiments of the present inventive concept.

### DETAILED DESCRIPTION OF EMBODIMENTS

The inventive concept now will be described more fully hereinafter with reference to the accompanying drawings, in which illustrative embodiments of the inventive concept are shown. This inventive concept may, however, be embodied in many different forms and should not be construed as limited to the embodiments set forth herein; rather, these embodiments are provided so that this disclosure will be thorough and complete, and will fully convey the scope of the inventive concept to those skilled in the art. Like numbers refer to like elements throughout. As used herein, the term "and/or" includes any and all combinations of one or more of the associated listed items. Similarly, as used herein, the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

Reference will now be made in detail in various and alternative example embodiments and to the accompanying figures. Each example embodiment is provided by way of explanation, and not as a limitation. It will be apparent to those skilled in the art that modifications and variations can be made without departing from the scope or spirit of the disclosure and claims. For instance, features illustrated or described as part of one embodiment may be used in connection with another embodiment to yield a still further embodiment. Thus, it is intended that the present disclosure includes modifications and variations that come within the scope of the appended claims and their equivalents.

Some embodiments of the present inventive concept utilize forms of artificial intelligence (AI) and machine learning (ML). AI is general term for the use of technology to create machines that can mimic human intelligence. AI uses math and logic to simulate human reasoning and problem-solving. Examples of AI include smart assistants, robotic vacuum cleaners, and self-driving cars.

ML is a subset of AI that uses mathematical models and algorithms to teach computers to learn and improve from experience without direct instruction. ML systems use patterns and inference to process large amounts of data and identify patterns. AI and ML are used in many industries. AI and ML can also be used to help people make informed decisions by eliminating uncertainty through data analysis.

Some embodiments of the present inventive concept use large language models (LLMs), which are a type of AI that can generate human-like text. LLMs are a subset of AI that use machine learning to understand, predict, and generate human-like text. They are "trained" on large amounts of text data and can mimic the writing style of a particular author or genre. LLMs are used in many applications, including natural language processing, machine translation, content generation, chatbots, and document summarization. They can also be used to perform other tasks, such as writing software code. LLMs are built on neural networks, which are computing systems inspired by the human brain. They are pre-trained and then fine-tuned to solve problems like text classification, question answering, document summarization, and text generation. Thus, when the present application refers to "AI" generally, AI refers to any and all types of AI without deviating from embodiments of the present inventive concept.

As discussed above, not all people think or learn alike. Some people are right-brained, others are left-brained, some are neurotypical and some are neuroatypical. Growth in any area, for example, physical, spiritual and intellectual, generally requires understanding and communication. Communication can be difficult when the individuals trying to communicate do not think or learn the same way. Accordingly, some embodiments of the present inventive concept provide methods, systems and computer program products that interpret data from one dimension into another dimension to aid understanding by all individuals.

For example, in engineering and math it is common to transform a model/system/equation from one dimension/domain to another. For example, time/frequency domain, cartesian/polar coordinate system, string theory model and the like. Such transformations provide new and creative ways to solve problems which cannot be solved in the original dimension/domain. Embodiments of the present inventive concept provide this same logic, but transform logical moves in a game, e.g., chess, into a unique art form (representation) in a creative dimension. This representation of the logical world in the creative work may be displayed, monetized and/or analyzed and may help artists understand the logical world. It may also help scientists and researchers understand the creative world, thus, helping to make more progress in their fields of study.

For example, some embodiments of the present inventive concept may create a digitalized art piece or music score (creative dimension) based on moves made in a game (logical dimension), such as chess or soccer. For example, moves in a chess game may each be assigned a pattern/music note/chord and may also have a time component (time element) that alters the pattern in a predictable manner. These patterns/musical notes/chords may be reproduced in another dimension, *i.e.* digital art or music, and provided to the user. The inputs from the chess game are very logical (left-brained), where the output is very creative (right-brained). Thus, in some embodiments, the creative output could be used to teach a right brained individual about chess. It could also be enjoyed for its artistic qualities, sold for income to allow the chess player to continue to play chess and the like. Similarly, in some embodiments, the creative output could be processed again to provide training modules related to the logical input.

Although embodiments of the present inventive concept use chess as a use case or example for explaining the details of the inventive concept, it will be understood that embodiments of the present inventive concept are not limited to use with the game of chess. Embodiments discussed herein could be used with any inputs that could create a corresponding output in a different dimension or form. For example, embodiments may be used in combination with a sport, for example, soccer. In these embodiments, a sensor or sensors could be attached to the player and the players moves and passes may be interpreted and presented as an artistic representation of the moves and passes.

Furthermore, although embodiments and examples discussed herein with respect to communication between different types of thinkers/learners, it will be understood that embodiments of the present inventive concept are not limited thereto. For example, systems and methods discussed herein can be used in any type of environment without departing from the scope of the present inventive concept. For example, embodiments discussed herein may be used in a school setting to create unique outputs from varying inputs and allow students to explore their own creativity in different dimensions.

Thus, some embodiments of the present inventive concept may provide an end to end system and related methods, processes and algorithms to transform, for example, logical moves in a game of chess into an art dimension/domain that can be used to, for example, develop new and unique blockchain cryptography based non-fungible token (NFT) art that cannot be reproduced, develop new multidimensional chess training tools (advance human brain potential), advance the field of neurology (scientific research, medical and health advances) and the like. Details with respect to embodiments of the present inventive concept will be discussed further herein with respect to the figures.

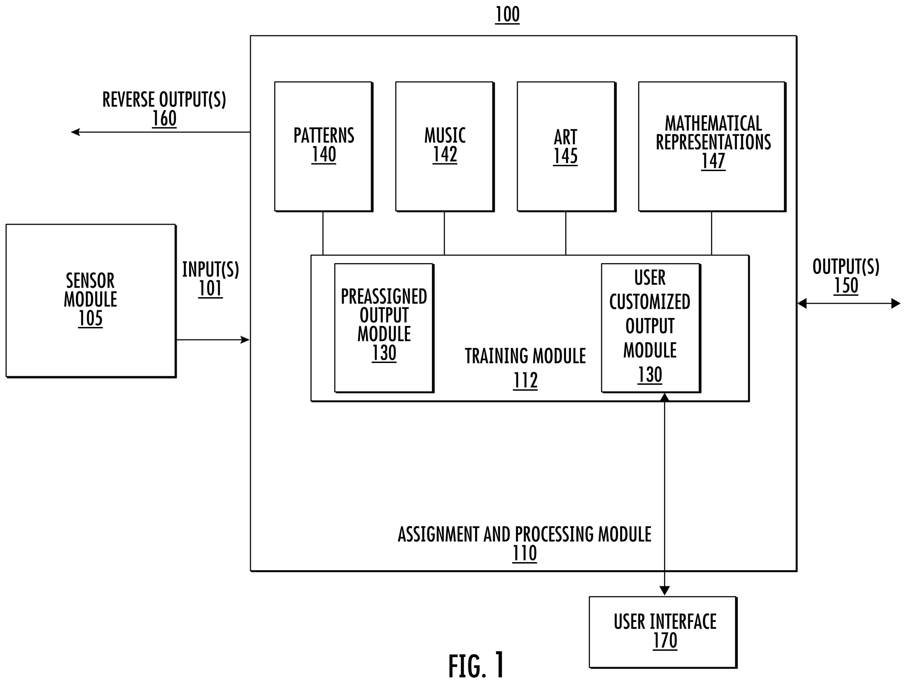

Referring now to Fig. 1, a system 100 including elements that facilitate embodiments of the present inventive concept will be discussed. It will be understood that the system 100 is provided as an example only and that embodiments are not limited thereto. The blocks and modules illustrated in Fig. 1 can be combined into fewer modules or expanded into more modules without departing from the scope of the present inventive concept.

As illustrated in Fig. 1, the system includes a sensor module 105, an assignment and processing module 110, and a user interface 170. The sensor module 105 can include any type of sensor needed to capture the data of the activity being monitored. For example, if the activity is a chess game the sensor or sensors of the sensor module 105 would be configured to capture data related to the chess move(s) and the associated time it takes to make the move using, for example, available chess e-boards that connect to computers. Thus, the inputs 101 from the sensor 105 include the move and a related timing component. Similarly, if the activity were a soccer game, the sensors of the sensor module 105 may provide data associated with angles of passing, how long the player holds on to the ball, how long the ball travels before being received by another player or hits the back of the goal and the like. This sensed data is provided as inputs 101 to the assignment and processing module 110.

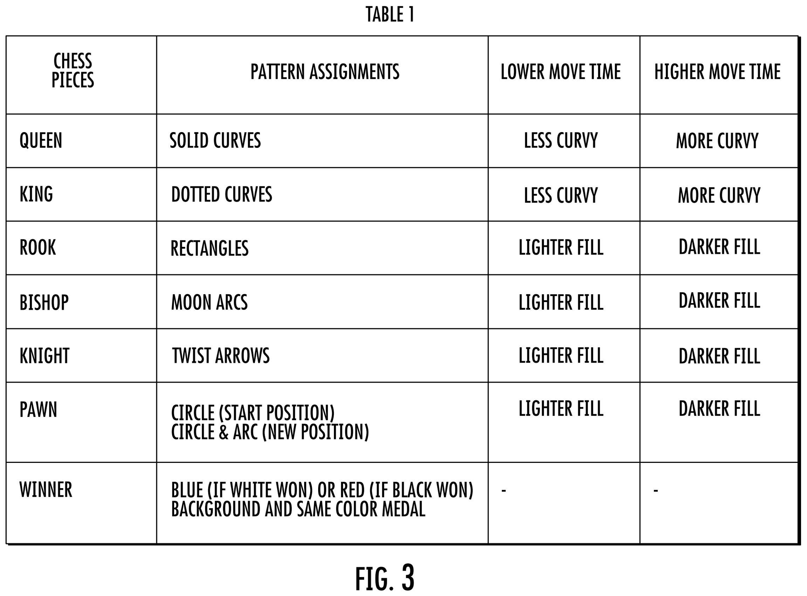

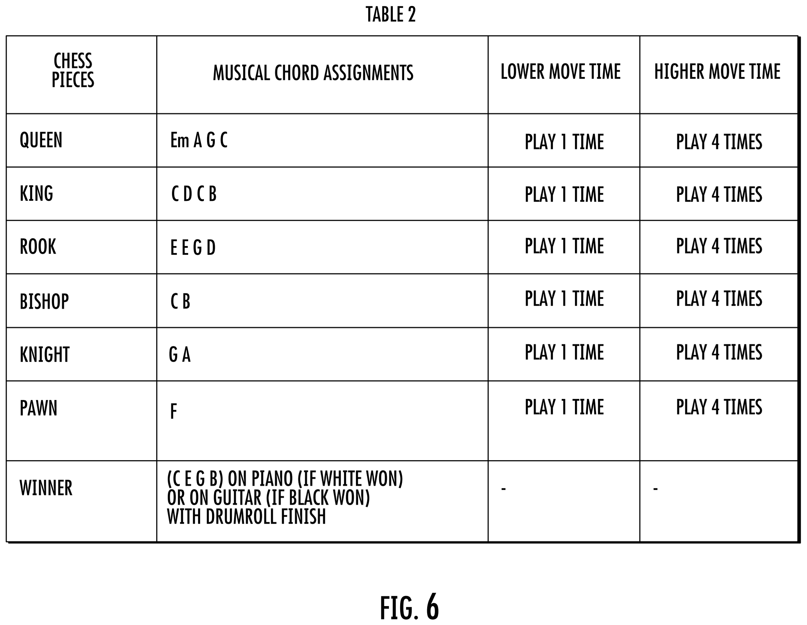

As illustrated, the assignment and processing module 110 includes an AI training module 112 and various databases including patterns 140, music 142, art 145 and mathematical representations 147 (Collectively "representations"). These databases are provided as examples only and embodiments are not limited thereto. Within the training module 112, the preassigned output module 120 is configured to assign specific representations to the inputs 101. In other words, the representations for each chess move and timing component are predetermined and are assigned based on the assignments. Example representations for moves in a chess game are provide in Tables 1 and 2 illustrated in Figs. 3 and 6, respectively. The user customized output module 130 is configured to receive input from a user via the user interface 170 and may assign unique patterns to the inputs 101 based on user preference. For example, a user may design a specific piece of art that corresponds to each move in the chess game and dictate how this specific piece of art is altered by, for example, the time component, accuracy level and additional derived game parameters. These modules 120 and 130 may be used separately or in combination to create the unique outputs 150. The unique outputs 150 may also be provided back through the assignment and processing module 110 to provide the reverse outputs 160 in some embodiments. For example, the art piece output from the assignment and processing module 110 can be deconstructed to provide the details of the chess moves and the timing thereof as reverse outputs 160. Similarly, the artistic outputs 150 may be further processed to provide, for example, instruction modules for the input activity.

It will be understood that in some embodiments of the present inventive concept, the training module may use AI to learn and train the data provided as inputs 101 and outputs 150, 160 to further refine the processes and provide creative outputs that can lend themselves to bridging the gap between right and left brained thinkers as will be discussed further below.

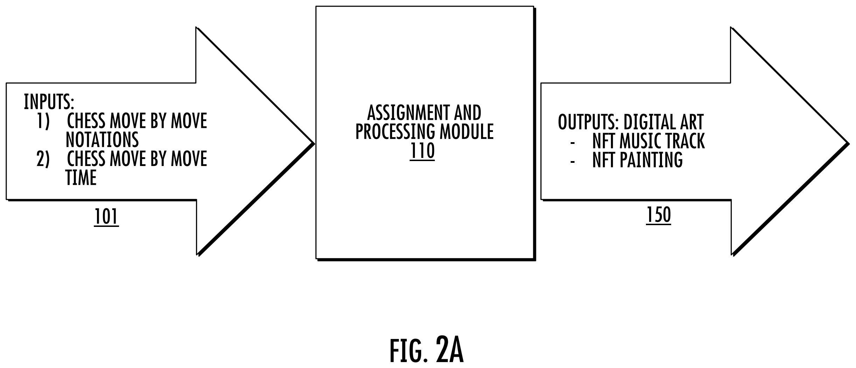

Various example embodiments of the present inventive concept will now be discussed with respect to Figs. 2A through 12 below. Referring first to Fig. 2A, a high level flow diagram illustrating inputs 101 (*e.g.* chess moves) into the assignment and processing module 110 and the associated outputs 150, e.g. digital art outputs, will be discussed. In particular, as discussed above, Fig. 2A illustrates inputting (101) chess moves having both a move component and time component. Having both a move component and a time component guarantees that no two chess games will ever result in the same output 150. In other words, it is impossible for the same moves to be made in the exact same time period in two different chess games. The assignment and processing module 110 assigns, for example, an art pattern/music (Tables 1 and 2), to a move in the chess game and then the art pattern/music is adjusted based on the time component. Thus, for example, the same move made in both 10 seconds and 20 seconds will generate a different output 150. For example, the move may be assigned a circle pattern, and the circle may get bigger the longer the move takes to perform. Similarly, the move may be assigned a musical note/chord or pattern and the beat may be made faster the longer the move takes to make. Once the game is completed, a digital art output may be generated including, for example, an NFT music track or NFT painting. This digital art output may be representation of the chess game in a different domain or dimension, based on a weighted function of multiple game parameters, such as chess moves, move times, move accuracy, distance, points per player and the like.

The outputs generated in accordance with embodiments of the present inventive concept may help a right brained or neuroatypical person/user more easily understand a chess game and possibly even assist this person in learning how to play chess. Furthermore, these related inputs and outputs representing left brain and right brain visualization may also assist scientists in further understanding how the mind works.

Embodiments of the present inventive concept may be implemented using any application capable of performing the methods. For example, any application capable of transforming a chess game into NFT digital art could be used to implement embodiments illustrated in Fig. 2A. In some embodiments, once the digital NFT is created, these unique outputs could be sold for capital. For example, the art could be uploaded to a digital store (app store). The details of transforming the art back into the chess moves could be sold, the tool may be licensed and the like. Furthermore, these digital pieces of art could be displayed at chess tournaments, museums, fairs, schools, universities and the like to showcase transformed digital art. The digital art outputs could also be for personal use, for example, to create a personalized gift or a souvenir in various forms, for example, art frames, postcards, audio tracks and the like.

In these embodiments, each square on the chess board is assumed to be a unit square, then any music special effects (dirty or clean or bass etc.) or any picture special effects (how much shape fill or curve angle etc.) can be directly or inversely proportional to the "move time," "distance traveled," "points of each player," "move accuracy level" and other game variables. Thus, the assignment and processing module 110, in some embodiments, can use, weighted functions, mathematical equations or can apply theoretical principals or theorems on the game parameters input to module 110 (chess move and move time) or processed by module 110 (move accuracy, points per player, distance etc.) to create a unique visual or audible output. For example, Pythagoras theorem or line slope of a moved piece or multi-variable linear algebra equation, to process the moves and related time and produce a visual or audible output. For example: [special effects = (square of move time) + (2 x distance)]. The final output NFT music track or painting may therefore be mathematically unique for selling it on, for example, blockchain/crypto digital app stores or NFT marketplace and no one can recreate the digital art. It will be understood that these examples are provided for illustrative purposes only and embodiment of the present inventive concept are not limited thereto.

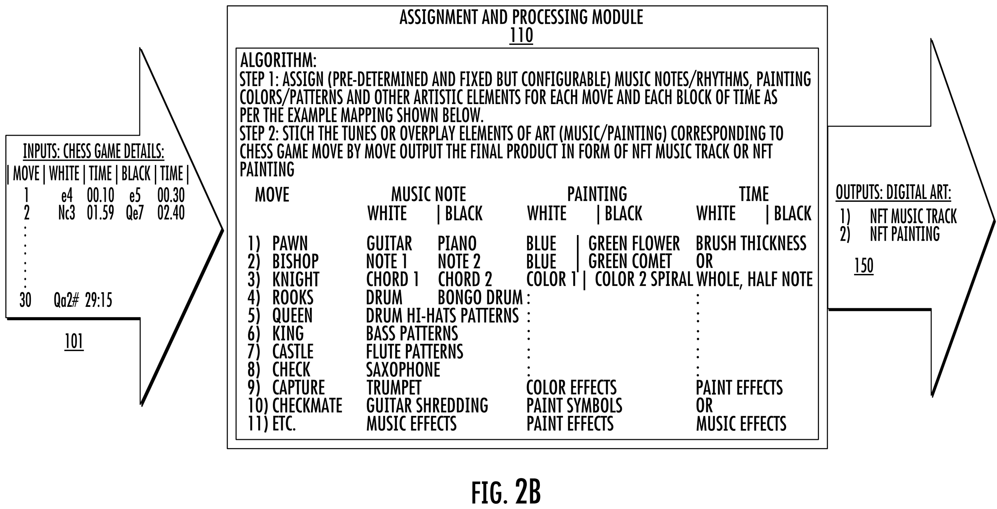

A more detailed flow chart of the basic flow of Fig. 2A is illustrated in Fig. 2B, which will now be discussed. Before the chess game begins, pre-determined and fixed but configurable music notes/rhythms, painting colors/patterns and other artistic elements are assigned to each possible move in a chess game and similarly for each block of time. As illustrated in Fig. 2B, the inputs 101 include a plurality of numbered moves 1, 2.... N (30 in Fig. 2). Each move includes a move for each player, black and white, and an associated time for that move. For example, during the first move (1) white moved to e4 in a time unit .10 and black moved to e5 in a time unit .30. Each move has similar move and time components. As further illustrated in Fig. 2B, the time components are significantly longer than the time components of the first move.

These inputs having the move and time components are provided to the assignment and processing module 110. The assignment and processing module 110 is configured to receive the inputs 101, process these inputs to get additional game parameters such as move accuracy, distance traveled etc., and to also assign the artistic elements to each combination of moves and times by using, for example, a mapping table or weighted function of all game variables. Examples of these moves having a corresponding artistic element and timing adjustment are illustrated in Fig. 2B. As shown, each move, e.g. pawn, bishop, knight, rook, queen, king, castle, check capture, checkmate and the like, is assigned a musical note or pattern/painting. The white chess pieces are assigned different artistic elements than the black chess pieces. For example, as illustrated in Fig. 2B, the white pawn is represented by a guitar note or a blue flower and the black pawn is represented by a piano note or a green flower. As shown, each move is similarly assigned a musical note and painting based on the color of the chess pieces (black or white pieces). Furthermore, each move is also adjusted based on the time component and additional game parameters processed by module 110. As further illustrated in Fig. 2B, the lines get thicker as the move takes longer or the music is provided in whole or half notes and the like. Once the moves have all been processed and assigned 110, the music or artistic elements corresponding to the chess game are output 150 as a unique NFT Music Track or NFT Painting.

An example output of the assignment and processing module 110 will now be discussed with respect to Figs. 3 through 5B. Table 1 is illustrated in Fig. 3. Table 1 illustrates the chess pieces (queen, king, ...) and their corresponding pattern assignments (solid curves, dotted curves...) and the definition of how to alter these patterns based on time of move. For example, in Table 1, lower move times produce a less curvy, solid curve for a queen and higher move times produce a more curvy, solid line for the queen. Each move has similar details associated therewith in Table 1. For this example, the colors of the pieces were assigned colors to be presented in the output. For example, the white pieces were assigned cool colors, such as blue, green and cyan and the black pieces were assigned warm colors, such as red, brown and orange. Since the figures associated with this document are provided in grey scale, the various colors are not visible, however, the details are provided to enhance the description.

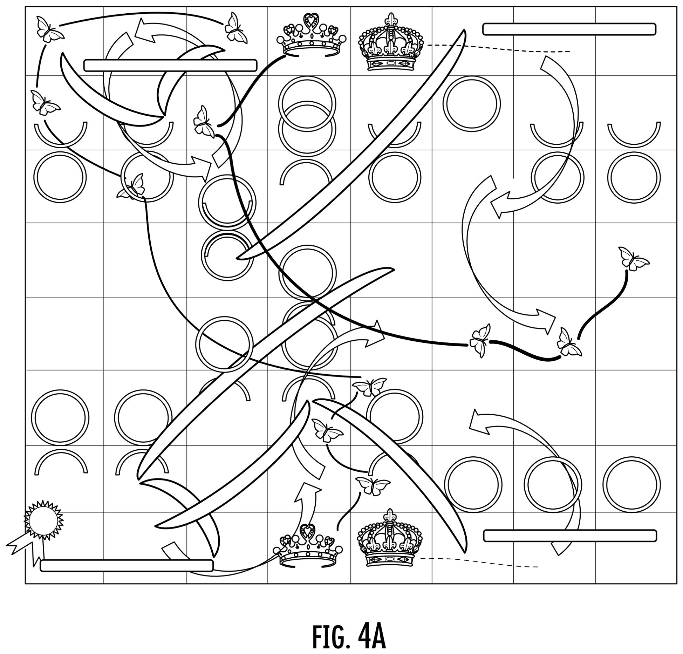

Fig. 4A illustrates an output of a chess game having the assignments of Table 1 of Fig. 3, however, in the example illustrated in Fig. 4A, the move times were fixed or constant. The art illustrated in Fig. 4A represents an actual international chess game with the following moves notations played: move # 1(b3,b6); move # 2(Bb2,Bb7); 3(Nf3,Nf6); 4(e3,e6); 5(d4,c5); 6(Nbd2,Be7); 7(Bd3,Nc6); 8(a3,Qc7); 9(0-0,h6); 10(c4,a6)...until last move 25(Ne4,1-0) after which black's queen is trapped and black resigns, white wins.

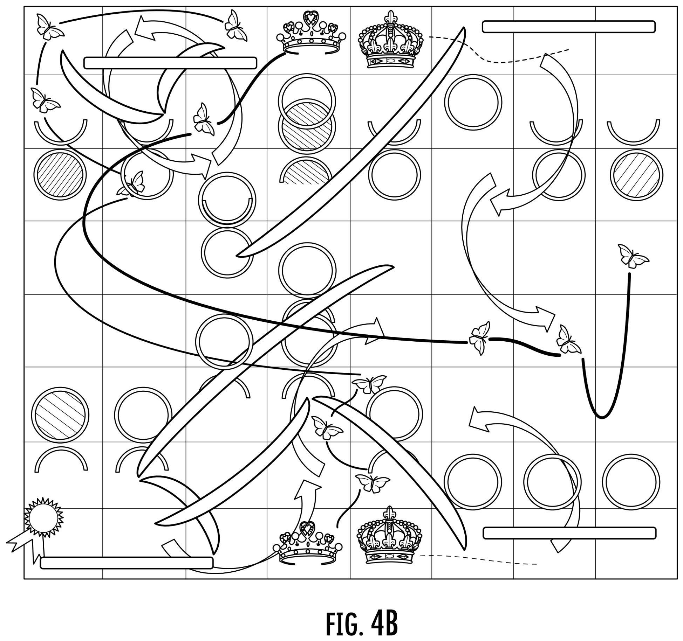

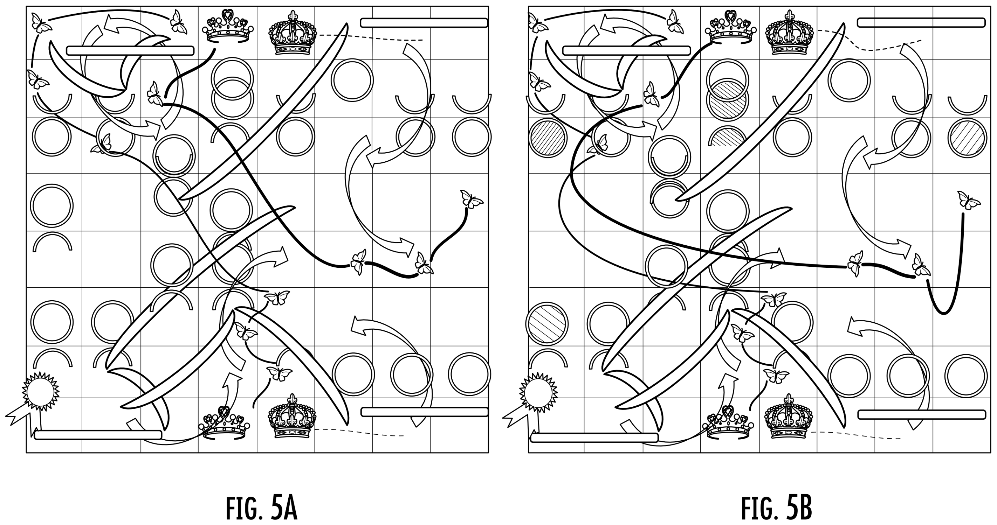

Similarly, Fig. 4B is an output of the same chess game of Fig. 4A, however, the move time of Fig. 4B was not kept constant. Thus, Fig. 4B was produced using the instructions in the last two columns of Table 1. The differences between the outputs of Fig. 4A and 4B are clearer when viewing the two artistic outputs side by side in Figs. 5A and 5B, respectively. The move time was kept constant in Fig. 5A and was varied in Fig. 5B. It will be understood that the details discussed with respect to Figs. 3 through 5B are provided as examples only and embodiments of the present inventive concept are not limited thereto.

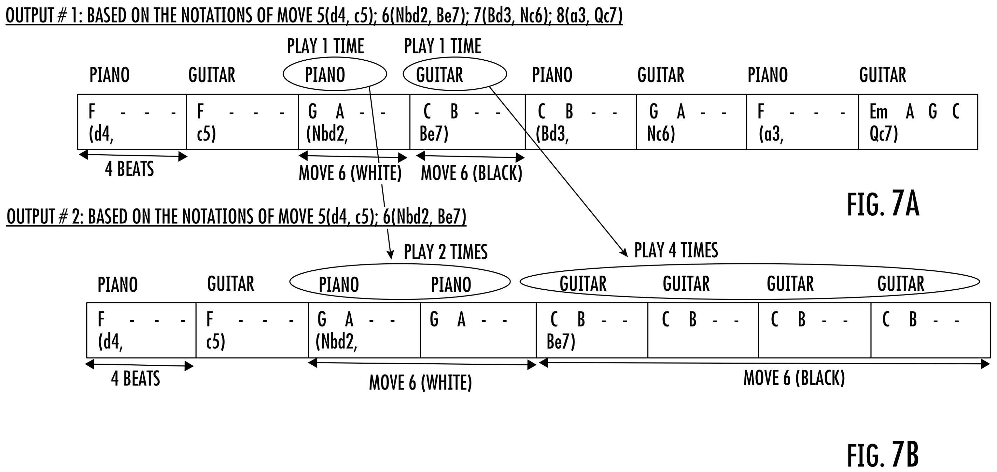

Referring now to Figs. 6 through 7B, embodiments of the present inventive concept having a musical output will be discussed. The chess game being represented in Figs. 7A and 7B is the same as the chess game discussed above with respect to Figs. 3 through 5B having the same moves. Referring first to Table 2 of Fig. 6, similar to Table 1 of Fig. 3, Table 2 illustrates the various chess pieces (queen, king...) and their associated musical chord assignments (Em A G C; C D C B; ...). Furthermore, Table 2 also illustrates the timing adjustments of the musical chord assignments. For example, when the queen makes a slower move, the chord is played one time. However, when the queen is played faster, the chord is played 4 times. Similarly, each remaining chess piece is provided with an associated musical chord and timing adjustments. Each color is also assigned a specific instruments. In embodiments illustrated in Figs. 6 through 7B, white is represented by a piano and black is represented by a guitar. Table 2 is provided as an example only and does not limit embodiments discussed herein.

Referring now to the outputs illustrated in Figs. 7A and 7B. Fig. 7A illustrates the output digital music track based on input game moves having a fixed or constant move time. In contrast, Fig. 7B illustrates the output digital music track based on input game moves having different (assumed) move times. In particular, Fig. 7A illustrates moves 5(d4, c5); 6(Nbd2, Be7); 7(Bd3, Nc6); 8(a3, Qc7) of the chess game input assuming a fixed move time. Fig. 7B illustrates moves 5 and 6 of the input assuming longer move times for move 6. It will be understood that the background music notations are intended to be part of final music track but are not shown in Figs. 7A and 7B to simplify the illustrations.

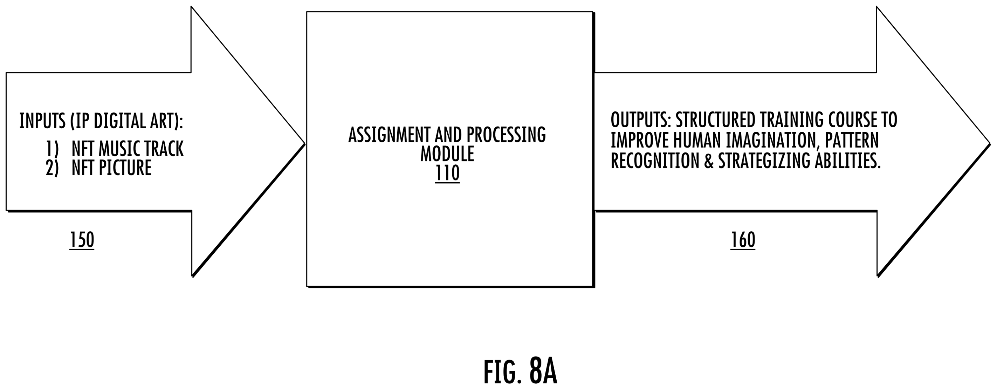

Thus, Figs. 3 through 7B illustrate examples of inputting moves in a chess game and processing those moves, assigning them artistic representations and outputting a unique artistic representation that cannot be replicated. It will be understood that some embodiments of the present inventive concept may be used beyond outputting an artistic work. These embodiments will be discussed below with respect to Figs. 8A through 12.

Referring first to Fig. 8A, a basic flow diagram illustrating using embodiments of the present inventive concept to create structured training courses utilizing the artistic representations discussed above. As illustrated in Fig. 8A, the inputs 101 are now, for example, the NFT music track or NFT picture discussed above as the outputs 150. These inputs are processed by the assignment and processing module 110 to output a structured training course to, for example, improve human imagination, pattern recognition and strategizing abilities. This process is similar to the reverse process providing the reverse outputs 160 discussed above with respect to Fig. 1.

Existing AI based chess trainers and blind chess training tools have produced great chess players such as Magnus Carlsen who has the highest chess rating of 2882. However, embodiments of the present inventive concept that provide multidimensional training tools and methods using digital art (music/picture) to create chess puzzles, game reverse mapping and the like may take the human mind potential to a new level.

Although embodiments of the multidimensional training tool are discussed herein with respect to specific examples of chess and training tools, embodiments may also be used in other fields like memory/mind training for individuals with special needs, for example, individuals having Autism, ADHD and the like. These tools may allow these individuals to further understand how to play chess better than ever if shown the same game in a newly transformed artistic dimension and may produce greater players. For example, the Rubik's Cube world champion Max Park has Autism and may be able to see deep hidden patterns most others cannot easily recognize.

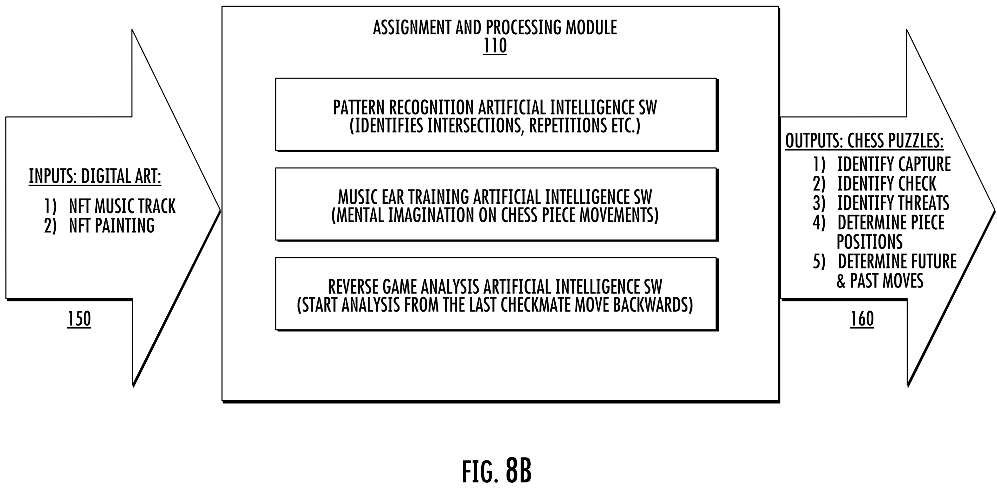

Referring to Fig. 8B, a more detailed diagram than the diagram of Fig. 8A will be discussed. As illustrated, the outputs 150, for example, NFT music track or NFT painting, of Fig. 2A and 2B are provided to the assignment and processing module 110. In the embodiments illustrated in Fig. 8B, the assignment and processing module 110 performs pattern recognition using, for example, AI, if an artistic pattern is provided. This pattern recognition can work in any manner that suits the inputs 150, for example, identifying intersections, repetitions and the like. If a music track is provided, the assignment and processing module 110 may be configured to recognize music patterns using, for example, music ear training AI. Finally, in some embodiments, the pattern recognition and training module 110 may use reverse analysis, for example, AI, to provide the inputs for the original chess game. The examples provided in Fig. 8B are not intended to limit the present inventive concept.

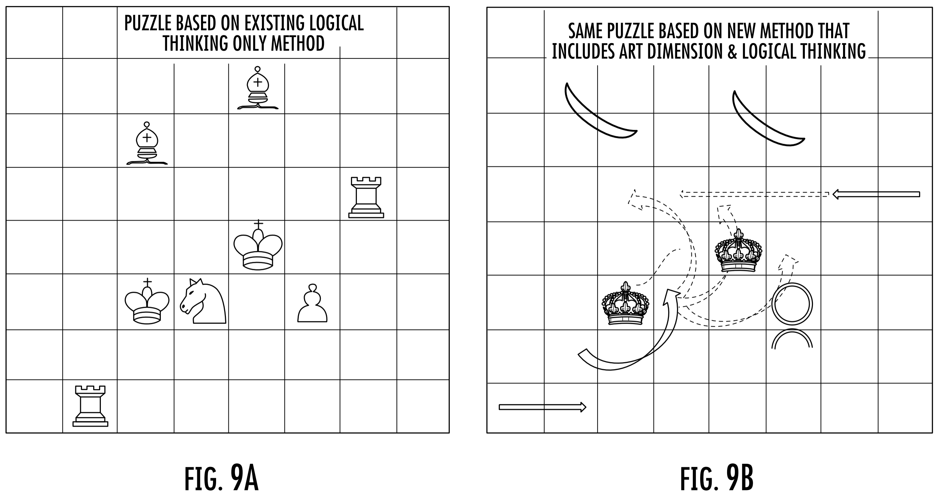

As illustrated in Fig. 8B, the outputs 160 can be, for example, chess puzzles that train chess players to identify capture, identify check, identify threats, determine piece positions, determine future and past moves and the like. Figures 9A and 9B provide examples of a one move checkmate puzzle. Fig. 9A illustrates a puzzle based on existing logical thinking only, but Fig. 9B provides the same puzzle created using embodiments discussed herein to provide an output that includes the puzzle in the art dimension and combines logical thinking.

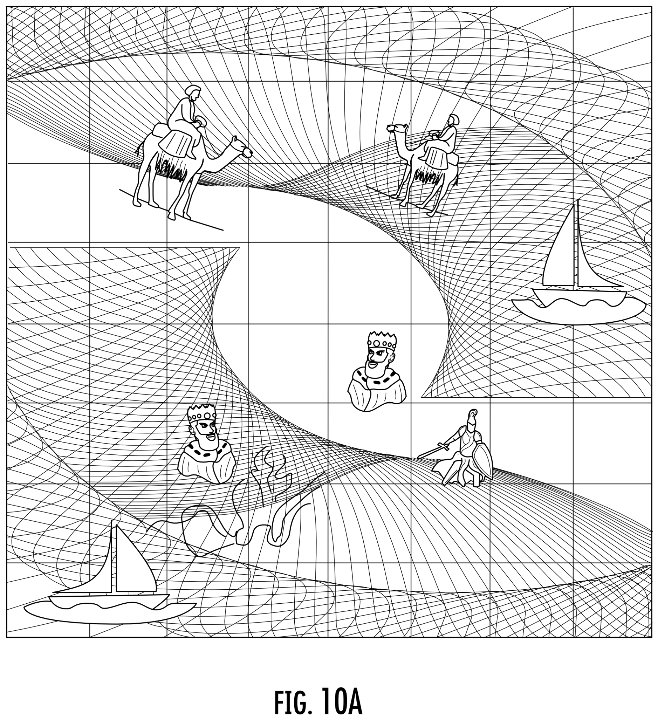

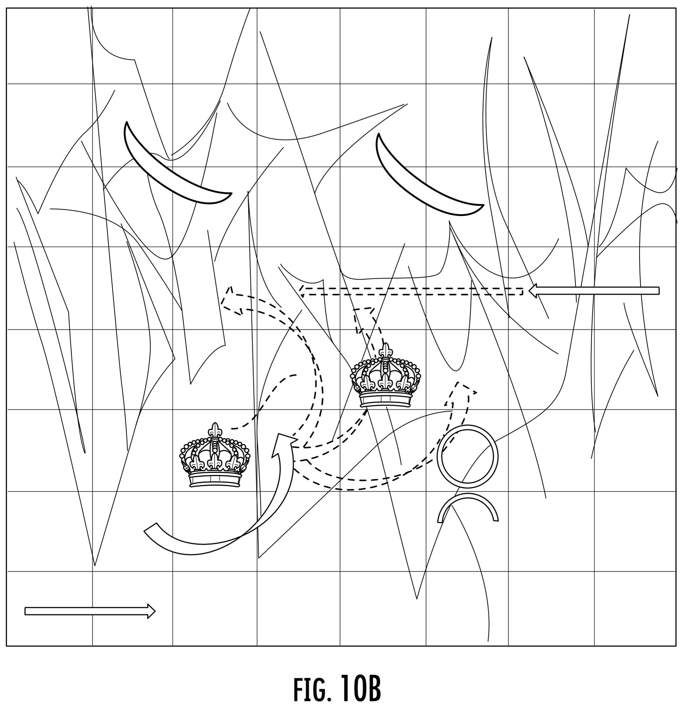

Furthermore Figs. 10A and 10B provide digital outputs for a same concept using different types of art. For example, the output in Fig. 10A is created using ancient images and the output in Fig. 10B is created using modern images. Thus, each output created is a unique piece of art that can be admired or used to create other outputs like training modules.

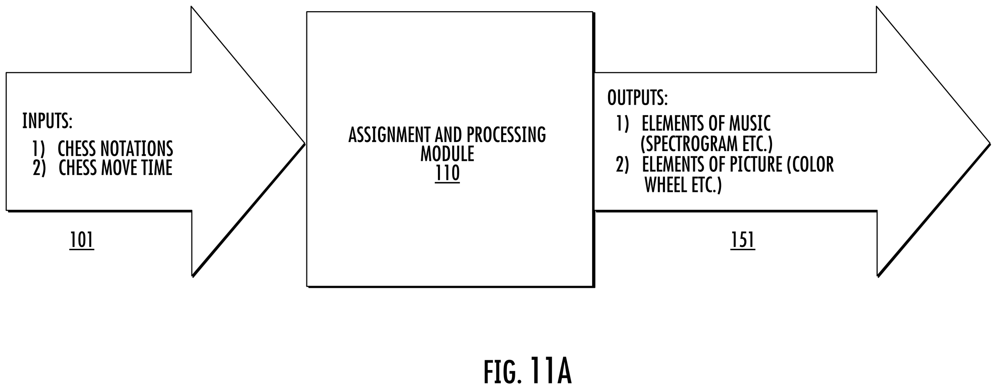

Finally, in some embodiments of the present inventive concept, the translation from one dimension to another may be used to advance the field of neuroscience. A high level flow diagram illustrating these aspects of the present inventive concept is provided in Fig. 11A. As illustrated in Fig. 11A, the inputs 101 again comprise chess notations and move times. These inputs are provided to the assignment and processing module 110 and the outputs 151 may include, for example, elements of music such as spectrogram or elements of a picture such as a color wheel.

In particular, scientists can study the transformed digital art, especially using games of chess prodigies, to provide needed data of how the brian works. For example, a second level of transformation of, for example, the NFT music track can be made to, for example, the frequency domain. Similarly, a second level of transformation of digital NFT painting can be made to a color spectrograph, identify shapes, patterns, curve fitting equations and the like. These second level transformations can be used by, for example, neuroscientists and researchers who may be able to better understand the human mind, human psychology and the like, identify certain brain characteristics and develop useful medicines.

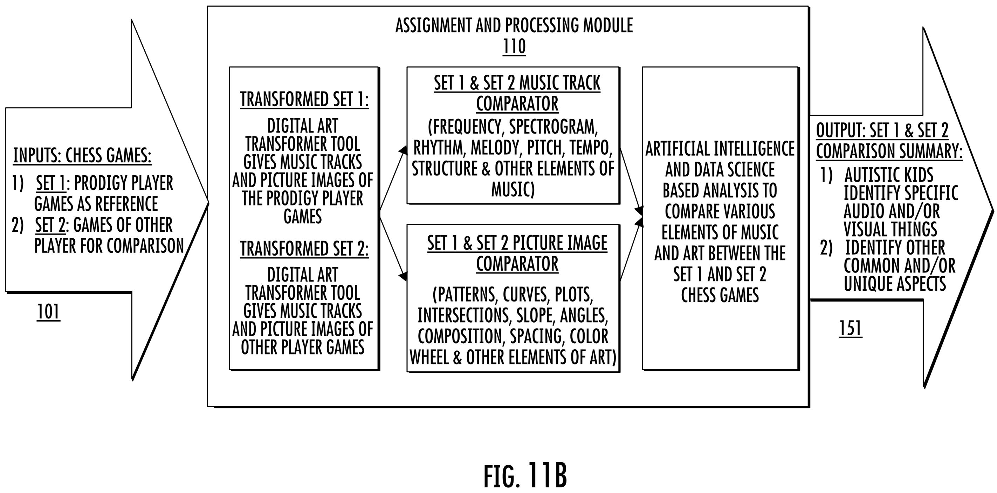

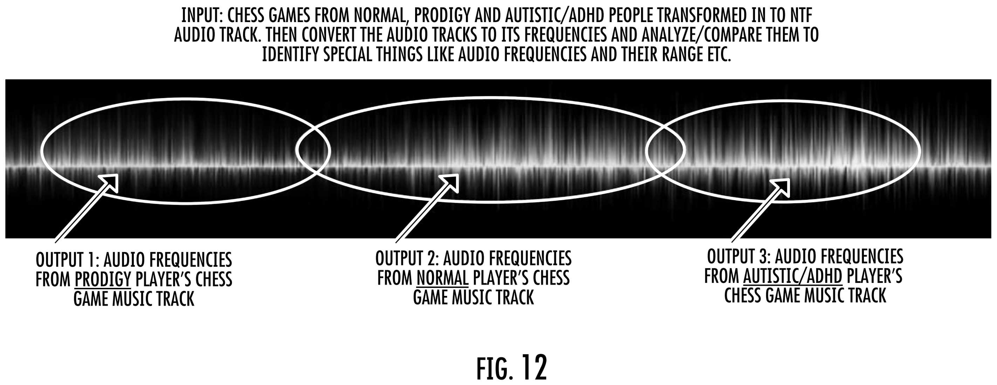

Referring now to Fig. 11B, a more detailed flow diagram of embodiments illustrated in Fig. 11A will be discussed. The example used in Fig. 11B is a chess game, however, embodiments are not limited thereto. As illustrated in Fig. 11B, the inputs 101 are two sets of data. A first set (Set 1) are moves of a prodigy player for a reference set of moves. The second set (Set 2) are moves of another player for comparison purposes. These sets of data are provided to the assignment and processing module 110. Both sets of data are transformed into alternative dimensions. In the example illustrated in Fig. 11B, the sets of data are transformed into music tracks and picture images representative of the chess data sets. The two sets of transformed data are then compared in the alternative dimension. These comparisons are analyzed using, for example, AI and data science based analysis. The output 151 may be a comparison summary that can be used by right brained thinkers or neuroatypical individuals, for example, individuals with Autism, to identify the various aspects of chess that may not be revealed to them in the logical dimension. Fig. 12 illustrates an audio track created from various player inputs. In particular, the audio track of Fig. 12 illustrates NFTs created from a prodigy player (output 1), a casual player (output 2) and a special needs player (output 3). It will be understood that these example are provided to illustrate aspects of the present inventive concept and the details of embodiments discussed herein are not limited thereto.

As briefly discussed above, chess is a very complex and analytical game when thought about and played in the logical dimension. Right brained thinkers may not be able to understand the various concepts associated with chess. However, when the moves of the game are translated into an alternate, more right brained dimensions such as pictures or music, suddenly these individuals may understand.

The outputs generated using embodiments discussed herein are unique and no two are the same by definition. These outputs can be used in many ways. The artistic representations can be enjoyed visually or sold as art, the outputs can be fed back into the engine to create tutorials, or these outputs can be analyzed to learn more about the human brain.

Although embodiments of the present inventive concept use chess as a use case or example for explaining the details of the inventive concept. It will be understood that embodiments of the present inventive concept are not limited to use with the game of chess but could be used with any inputs that could create a corresponding output in a different dimension or form. For example, embodiments may be used in combination with a sport like soccer. A sensor or sensors could be attached to the player and the player's moves and passes may be interpreted and presented in a visual output. Other options include, for example, checkers, Risk, Catan, soccer, lacrosse and the like.

Although embodiments and examples discussed herein with respect to communication between different types of thinkers/learners, it will be understood that embodiments of the present inventive concept are not limited thereto. For example, systems and methods discussed herein can be used in any type of environment without departing from the scope of the present inventive concept. For example, embodiments discussed herein may be used in a school setting to create unique outputs from varying inputs and allow students to explore their own creativity in different dimensions.

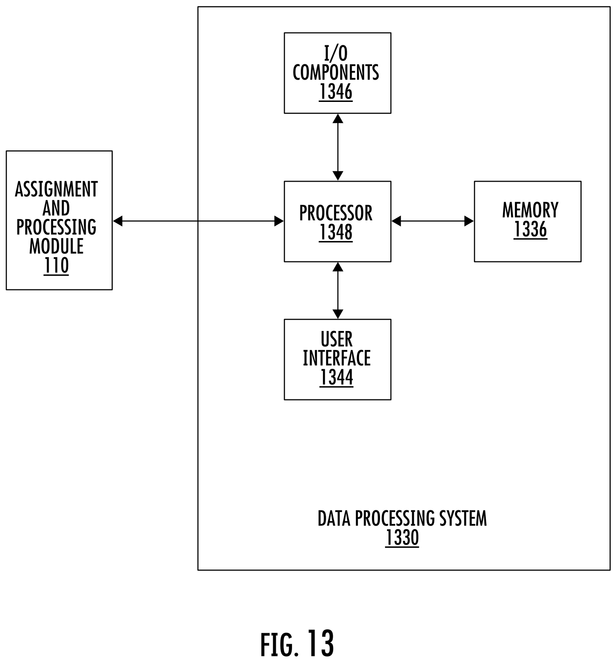

Referring now to Fig. 13, an example of a data processing system 1330 suitable for use with any of the examples described above will be discussed. Although the example data processing system 1330 is shown as in communication with the assignment and processing module 110 in accordance with embodiments of the present inventive concept, the data processing system 1330 may also be in any other component of the system without departing from the scope of the present inventive concept. In some examples, the data processing system 1330 can be any suitable computing device for performing operations according to the embodiments discussed herein described herein.

As illustrated, the data processing system 1330 includes a processor 1348 communicatively coupled to I/O components 1346, a user interface 1344 and a memory 1336. The processor 1348 can include one or more commercially available processors, embedded processors, secure processors, microprocessors, dual microprocessors, multi-core processors, other multi-processor architectures, another suitable processing device, or any combination of these. The memory 1336, which can be any suitable tangible (and non-transitory) computer-readable medium such as random-access memory (RAM), read-only memory (ROM), erasable and electronically programmable read-only memory (EEPROMs), or the like, embodies program components that configure operation of the data processing system 1330.

I/O components 1346 may be used to facilitate wired or wireless connections to devices such as one or more displays, game controllers, keyboards, mice, joysticks, cameras, buttons, speakers, microphones and/or other hardware used to input or output data. Memory 1336 represents nonvolatile storage such as magnetic, optical, or other storage media included in the data processing system and/or coupled to processor 1348.

The user interface 1344 may include, for example, a keyboard, keypad, touchpad, voice activation circuit, display or the like and the processor 1348 may execute program code or instructions stored in memory 1336.

It should be appreciated that data processing system 1330 may also include additional processors, additional storage, and a computer-readable medium (not shown). The processor(s) 1348 may execute additional computer-executable program instructions stored in memory 1336. Such processors may include a microprocessor, digital signal processor, application-specific integrated circuit, field programmable gate arrays, programmable interrupt controllers, programmable logic devices, programmable read-only memories, electronically programmable read-only memories, or other similar devices.

The aforementioned flow logic and/or methods show the functionality and operation of various services and applications described herein. If embodied in software, each block may represent a module, segment, or portion of code that includes program instructions to implement the specified logical function(s). The program instructions may be embodied in the form of source code that includes human-readable statements written in a programming language or machine code that includes numerical instructions recognizable by a suitable execution system such as a processor in a computer system or other system. The machine code may be converted from the source code, etc. Other suitable types of code include compiled code, interpreted code, executable code, static code, dynamic code, object-oriented code, visual code, and the like. The examples are not limited in this context.

If embodied in hardware, each block may represent a circuit or a number of interconnected circuits to implement the specified logical function(s). A circuit can include any of various commercially available processors, including without limitation an AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; Qualcomm^{®} Snapdragon^{®}; Intel^{®} Celeron^{®}, Core (2) Duo^{®}, Core i3, Core i5, Core i7, Itanium^{®}, Pentium^{®}, Xeon^{®}, Atom^{®} and XScale^{®} processors; and similar processors. Other types of multi-core processors and other multi-processor architectures may also be employed as part of the circuitry. According to some examples, circuitry may also include an application specific integrated circuit (ASIC) or a field programmable gate array (FPGA), and modules may be implemented as hardware elements of the ASIC or the FPGA. Further, embodiments may be provided in the form of a chip, chipset or package.

Although the aforementioned flow logic and/or methods each show a specific order of execution, it is understood that the order of execution may differ from that which is depicted. Also, operations shown in succession in the flowcharts may be able to be executed concurrently or with partial concurrence. Further, in some embodiments, one or more of the operations may be skipped or omitted. In addition, any number of counters, state variables, warning semaphores, or messages might be added to the logical flows or methods described herein, for purposes of enhanced utility, accounting, performance measurement, or providing troubleshooting aids, etc. It is understood that all such variations are within the scope of the present disclosure. Moreover, not all operations illustrated in a flow logic or method may be required for a novel implementation.

Where any operation or component discussed herein is implemented in the form of software, any one of a number of programming languages may be employed such as, for example, C, C++, C#, Objective C, Java, Javascript, Perl, PHP, Visual Basic, Python, Ruby, Delphi, Flash, or other programming languages. Software components are stored in a memory and are executable by a processor. In this respect, the term "executable" means a program file that is in a form that can ultimately be run by a processor. Examples of executable programs may be, for example, a compiled program that can be translated into machine code in a format that can be loaded into a random access portion of a memory and run by a processor, source code that may be expressed in proper format such as object code that is capable of being loaded into a random access portion of a memory and executed by a processor, or source code that may be interpreted by another executable program to generate instructions in a random access portion of a memory to be executed by a processor, etc. An executable program may be stored in any portion or component of a memory. In the context of the present disclosure, a "computer-readable medium" can be any medium (e.g., memory) that can contain, store, or maintain the logic or application described herein for use by or in connection with the instruction execution system.

A memory is defined herein as an article of manufacture and including volatile and/or non-volatile memory, removable and/or non-removable memory, erasable and/or non-erasable memory, writeable and/or re-writeable memory, and so forth. Volatile components are those that do not retain data values upon loss of power. Nonvolatile components are those that retain data upon a loss of power. Thus, a memory may include, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may include, for example, static random-access memory (SRAM), dynamic random-access memory (DRAM), or magnetic random-access memory (MRAM) and other such devices. The ROM may include, for example, a programmable read-only memory (PROM), an erasable programmable read-only memory (EPROM), an electrically erasable programmable read-only memory (EEPROM), or other like memory device.

The devices described herein may include multiple processors and multiple memories that operate in parallel processing circuits, respectively. In such a case, a local interface, such as a communication bus, may facilitate communication between any two of the multiple processors, between any processor and any of the memories, or between any two of the memories, etc. A local interface may include additional systems designed to coordinate this communication, including, for example, performing load balancing. A processor may be of electrical or of some other available construction.

It should be emphasized that the above-described embodiments of the present disclosure are merely possible examples of implementations set forth for a clear understanding of the principles of the disclosure. It is, of course, not possible to describe every conceivable combination of components and/or methodologies, but one of ordinary skill in the art may recognize that many further combinations and permutations are possible. That is, many variations and modifications may be made to the above-described embodiment(s) without departing substantially from the spirit and principles of the disclosure. All such modifications and variations are intended to be included herein within the scope of this disclosure and protected by the following claims.

## Claims

1. A method of creating unique visual and/or audible output based on an unrelated input by a user, using a data processing system,, the method comprising:
receiving a plurality of inputs related to a game, the inputs related to the game having at least a time component and logic component;
processing the plurality of inputs related to the game;
creating a unique visual and/or audible output based on the inputs related to the game, the unique visual and/or audible output being unrelated to the game; and
providing the unique visual and/or audible output to the user.

2. The method of Claim 1, wherein the game comprises chess.

3. The method of Claim 2, wherein the plurality of inputs related to chess each comprise a logic component of a chess move and a time component indicating how long it took the user to make the chess move.

4. The method of Claim 3, wherein each chess move has a dedicated visual and/or audible output associated therewith and the dedicated visual and/or audible output is modified by at least one of how long it took the user to make the chess move, move accuracy, player points and other game parameters.

5. The method of Claim 4, wherein the dedicated visual and/or audible outputs comprise fixed artistic elements for each move.

6. The method of Claim 5, wherein the fixed artistic elements comprise one or more of musical notes, musical chords, musical rhythms, colors, shapes, patterns and original art.

7. The method of any one of Claims 4 to 6, wherein providing the unique visual and/or audible output comprises providing the modified dedicated visual and/or audible output of all the chess moves to create the unique visual and/or audible output.

8. The method of any one of Claims 4 to 7, further comprising training the user to play chess using the unique visual and/or audible output.

9. The method of Claim 8, further comprising providing a structured training course for playing chess based on the unique visual and/or audible output.

10. The method of any preceding Claim, further comprising providing the unique visual and/or audible output to the user as an input to a processing module and using the unique visual and/or audible output to learn new details about a human brain.

11. The method of any preceding Claim, wherein providing is followed by using the unique visual and/or audible output to train the user how to play the game.

12. The method of any preceding Claim, wherein the unique visual and/or audible output is presented as a completely unique item of digital art that cannot be recreated.

13. The method of any preceding Claim, wherein the unique visual and/or audible output is presented in a different dimension and/or domain than the game.

14. A data processing system for creating unique visual and/or audible output based on an unrelated input by a user, the system including modules that are configured to perform the method of any preceding claim.

15. A computer program comprising a set of instructions executable on a computing device that cause the computing device to create a unique visual and/or audible output based on an unrelated input by a user by performing the method of any one of claims 1 to 13.
